# EUROPÄISCHE PATENTSCHRIFT

(11) **EP 2 332 685 B1**
(45) Veröffentlichungstag und Bekanntmachung des Hinweises auf die Patenterteilung: **09.05.2012**
(21) Anmeldenummer: 10192599.8
(22) Anmeldetag: 25.11.2010
(51) Int. Cl.: B23K 11/30, B23B 5/16

(54) **Fräskopf für zwei Punktschweißelektroden einer Schweißzange**
Cutting head for two spot welding electrodes of a welding gun
Tête de fraisage pour deux électrodes de soudage par point d'une pince de soudage

(30) Priorität: 25.11.2009 DE 102009047150
(43) Veröffentlichungstag der Anmeldung: 15.06.2011
(73) Patentinhaber: AEG SVS Schweisstechnik GmbH, 45475 Mülheim/Ruhr (DE)
(72) Erfinder: Schmidt, Harald, 45144 Essen (DE)
(74) Vertreter: Bauer Vorberg Kayser Patentanwälte

(56) Entgegenhaltungen:
- EP-A1- 0 804 986
- WO-A1-99/47299
- DE-U1-202007 000 183
- US-A- 4 856 949

## Beschreibung

Die Erfindung bezieht sich auf einen Fräskopf für zwei Punktschweißelektroden einer Schweißzange, wobei die Punktschweißelektroden jeweils einen Zentralbereich und eine umlaufende Flanke aufweisen, der Fräskopf eine Oberseite, eine Unterseite und mindestens zwei Durchlässe hat, welche die Oberseite und die Unterseite miteinander verbinden, Oberseite und Unterseite jeweils mindestens eine Flankenschneide für die Bearbeitung der Flanke der zugehörigen Punktschweißelektrode und mindestens eine Zentralschneide für die Bearbeitung des Zentralbereichs der zugehörigen Punktschweißelektrode haben, dabei ist jeder Durchlass von mindestens einer Zentralschneide und/oder mindestens einer Flankenschneide teilweise begrenzt.

Derartige Fräsköpfe sind vielfach bekannt, der Fräskopf der eingangs genannten Art ist beispielsweise aus DE 20 2007 000 183 U1 bekannt. Zudem wird auf EP 581 308 A1, EP 804 986 B1, EP 1 518 631 A1, DE 10 2005 013 454 B4, US 4,892,448, US 4,966,506 und US 4,892,448 verwiesen. Allgemein zu Fräseinrichtungen wird auf die WO 1997044153 A1 verwiesen. US 4 856 949 A offenbart einen Fräskopf nach dem Oberbegriff des Anspruchs 1.

Punktschweißverfahren stellen eine insbesondere in der Automobilindustrie weit verbreitete Möglichkeit dar, Metallbleche miteinander zu verbinden. Die zwei in einer Zange angeordneten Schweißelektroden, die in der Regel aus einer kupferhaltigen Legierung oder aus Kupfer gefertigt sind, sind so an eine Spannungsquelle angeschlossen, das bei ihrem Zusammenführen und Kontakt mit den zu verbindenden Blechen ein Strom fließt und örtlich große Hitze entsteht, welche die Metalle aufschmelzen lässt und die Bleche verschweißt. Dabei sind die Schweißelektroden durch den Kontakt mit den Blechen einer Abnutzung und einer Deformation, kurz einem Verschleiß ausgeliefert. Deshalb werden die Schweißelektroden in regelmäßigen Abständen überholt, indem die Schweißelektroden an eine Fräseinrichtung herangeführt werden und diese wie in einem Bleistiftspitzer gefräst werden.

Eine Schweißzange der hier in Rede stehenden Art ist beispielsweise bekannt aus der DE 60 2004 009 638 T2 und DE 821 473 U1. Von diesen zeigt die DE 60 2004 009 638 T2 eine sogenannte X-Zange oder Scherenzange. Die DE 821 473 U1 ist ein Beispiel für eine sogenannte C-Zange. Für beide Arten von Punktschweißzangen soll der Fräskopf einsetzbar sein.

Bei derartigen Fräsköpfen tritt das Problem einer Verstopfung durch die erzeugten Späne auf. Diese Verstopfung hat mehrere Ursachen, von denen nachfolgend einige Ursachen genannt werden: Auf den zu verschweißenden Blechen befindet sich häufig noch etwas Öl, das z.B. von Pressen, insbesondere Tiefziehpressen, stammt. Weiterhin befindet sich manchmal Klebmittel in Nähe der herzustellenden Schweißpunkte, beispielsweise aufgrund einer zusätzlichen Verklebung von Karosserieblechen mittels eines Klebers. Der Klebstoff quillt aus der Schweißnaht hervor, gelangt an die Elektroden und letztlich in den Fräskopf. Dies tritt beispielsweise bei Überlappungsschweißnähten auf. Weiterhin sind die Elektroden und die Späne nicht immer in gleichem Zustand. Es kommt vor, dass das Kupfer der Elektroden heiß wird. Dies ist beispielsweise bei hoher Punktschweißfolge und/oder mangelnder Kühlung anzutreffen. Dann wird das Kupfer weich und der Span ändert seine Gestalt, er wird dann lang und dick.

Unabhängig von den jeweiligen speziellen Umständen soll sichergestellt sein, dass die Späne den Fräskopf nicht verstopfen, vielmehr vom Fräskopf abgeführt werden. Es soll ein manuelles Ausblasen des Fräskopfes mittels Druckluft auf ein Minimum beschränkt werden.

Ein Ansammeln von Spänen innerhalb des Fräskopfes kann dazu führen, dass die Späne den Fräsvorgang behindern. Insbesondere behindern Späne dann den Fräsvorgang, wenn sie in die Nähe oder in Kontakt mit einer Schneide kommen. Im Fräskopf angesammelte Späne können dazu führen, dass die Bildung eines neuen Spans behindert wird. Auch dadurch kann der Fräsvorgang beeinflusst werden.

Bei Verstopfungen kann es vorkommen, dass der Zentralbereich und/oder Flankenbereich nicht mehr sauber gefräst wird. Der Zentralbereich wird auch als Linse oder Wirkfläche bezeichnet. Die Schneiden werden häufig auch als Messer bezeichnet.

Hier setzt nun die Erfindung ein. Die Erfindung hat es sich zur Aufgabe gemacht, den Fräskopf der eingangs genannten Art dahingehend weiterzubilden, dass einer Ansammlung und Verstopfung durch Späne entgegengewirkt wird. Dabei kann der Fräskopf so gestaltet sein, dass jegliche Ansammlung von Spänen unabhängig vom jeweiligen Zustand möglichst vermieden wird. Insbesondere soll vermieden werden, dass Späne irgendwie in Kontakt mit einer Schneide kommen können, insbesondere in Kontakt mit einer anderen Schneide als derjenigen, von der sie stammen.

Diese Aufgabe wird ausgehend von den Merkmalen der eingangs genannten Art dadurch gelöst, dass jeder einzelne Durchlass entweder nur von einer Flankenschneide und/oder einer Zentralschneide der Oberseite oder nur von einer Flankenschneide und/oder einer Zentralschneide der Unterseite begrenzt ist.

Bei diesem Fräskopf ist sichergestellt, dass die Späne der Schneiden zweier unterschiedlicher Seiten, nämlich einer Schneide der Oberseite und einer Schneide der Unterseite, nicht in denselben Durchlass gelangen können. Auf diese Weise wird vermieden, dass Späne aufeinander zu laufen und kollidieren, dadurch zwangsweise in ihrer Bewegung abgebremst werden und am Ort verbleiben. Die Bewegungsrichtungen der Späne von zwei Schneiden unterschiedlicher Seiten des Fräskopfes sind entgegen gerichtet. Durch die Erfindung werden Zusammenstöße vermieden.

Erfindungsgemäß fallen die Späne von Schneiden unterschiedlicher Seiten nun in unterschiedlichen Durchlässen an, die räumlich voneinander getrennt sind. Die Späne kollidieren nicht mehr, sie können sich nicht mehr gegenseitig stören. Jede Zentralschneide und/oder Flankenschneide einer Seite des Fräskopfes hat einen eigenen Durchlass, also ein eigenes Fenster für die Späne.

Vorzugsweise haben die Flankenschneide und die ihr zugeordnete Zentralschneide derselben Seite des Fräskopfes einen gemeinsamen Durchlass. Vorzugsweise kann die Zentralschneide gegenüber der zugeordneten Flankenschneide derselben Seite winkelversetzt sein, so dass die jeweiligen Späne an unterschiedlichen, möglichst voneinander entfernten Orten anfallen, unabhängig davon aber durch den gleichen Durchlass gehen.

In einer anderen Ausführung ist es möglich, dass die Zentralschneide und die Flankenschneide derselben Seite des Fräskopfes eigene Durchlässe haben. Dann hat der Fräskopf insgesamt mindestens vier Durchlässe. Bei dieser Ausführung ist sichergestellt, dass selbst die Späne, die an unterschiedlichen Stellen derselben Seite des Fräskopfes anfallen, nicht einander stören können.

In bevorzugter Ausführung geht mindestens eine Flankenschneide der Oberseite kontinuierlich in eine Zentralschneide der Oberseite über und gilt entsprechendes auch für die Schneiden der Unterseite. Alternativ kann der Fräskopf aber auch so ausgeführt sein, dass die Flankenschneide derselben Seite räumlich getrennt ist von der Zentralschneide.

In bevorzugter Ausführung sind die Schneiden der Oberseite und die Schneiden der Unterseite baugleich ausgeführt. Es ist aber auch möglich, hier unterschiedliche Ausführungen vorzusehen. Vorzugsweise hat Fräskopf in einer Einbausituation, in der seine Drehachse mehr oder weniger vertikal verläuft, eine bevorzugte Einbaurichtung. Die Oberseite ist dann tatsächlich oben und die Unterseite ist tatsächlich unten.

Weitere Merkmale und Vorteile der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. In dieser Zeichnung zeigen:
- Fig. 1:: eine Draufsicht auf einen Fräskopf,
- Fig. 2:: einen Schnitt durch den Fräskopf gemäß Figur 1 entlang der Schnitt- linie II-II in Figur 1.
- Fig. 3:: eine schematische Darstellung in Seitenansicht von Frontbereichen von zwei Punktschweißelektroden einer (hier nicht dargestellten) Schweißzange, Zustand vor dem Fräsen,
- Fig. 4:: eine Darstellung wie in Figur 3, jedoch nunmehr nach dem Fräsen,

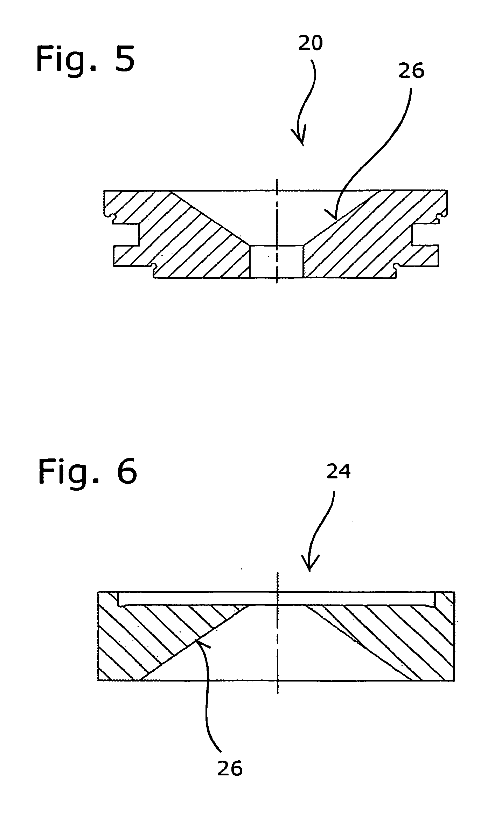

- Fig. 5:: als vergrößerter Ausschnitt aus Figur 2 eine Darstellung eines Ober- teils des Fräskopfes,
- Fig. 6:: in vergrößerter Darstellung aus Fig. 2 herausgenommen die Darstel- lung eines Unterteils des Fräskopfes,
- Fig. 7:: eine Seitenansicht eines Fräseinsatzes des Fräskopfes in einer Dar- stellung mit Blickrichtung wie in Figur 2,
- Fig. 8:: eine Draufsicht auf den Fräseinsatz gemäß Figur 7,
- Fig. 9:: eine Stirnansicht des Fräseinsatzes gemäß Figur 7, und

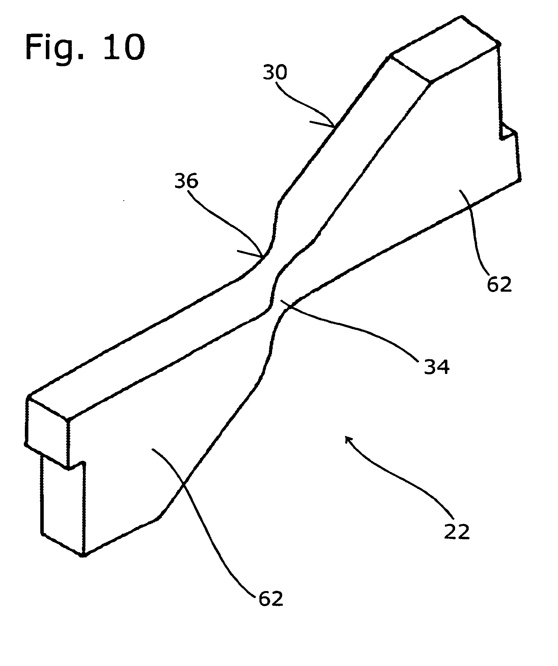

- Fig. 10:: eine dreidimensionale Darstellung des Fräseinsatzes.

In bekannter Weise ist der Fräskopf mehrteilig aufgebaut. Er hat ein Oberteil 20, einen Fräseinsatz 22 und ein Unterteil 24. Oberteil 20 und Unterteil 24 sind durch zwei um 180° versetzte Schrauben miteinander verbunden. Der Fräseinsatz ist um 90° versetzt gegenüber einem Durchmesser, auf dem die Schrauben liegen, angeordnet. Er ist zwischen Oberteil 20 und Unterteil 24 eingeklemmt.

Das Oberteil 20 bildet mit seiner oberen Fläche eine Oberseite 38 des Fräskopfes. Das Unterteil 24 bildet an seiner unteren Fläche eine Unterseite 40 des Fräskopfes.

Oberteil 20 und Unterteil 24 bilden jeweils eine konkave Mulde 26 aus. Diese Mulden 26 sind formgleich. Im gezeigten Ausführungsbeispiel haben sie die Form eines Stumpfkegels. Sie können auch ballig, parabolisch usw. sein. Aus den Mulden 26 ragt jeweils mit geringem Überstand auf der Oberseite 38 und auf der Unterseite 40 jeweils eine einzige Flankenschneide 30 hervor, der Überstand liegt zwischen 0,2 und 0,05 mm, beispielsweise zwischen 0,8 und 0,15 mm. Auch die Flankenschneiden 30 der beiden Seiten 38, 40 sind baugleich. In einem Zentralbereich hat der Fräseinsatz 22 einen Messerbalken 34, dort wird jeweils eine einzige Zentralschneide 36 für jede Seite 38, 40 ausgebildet.

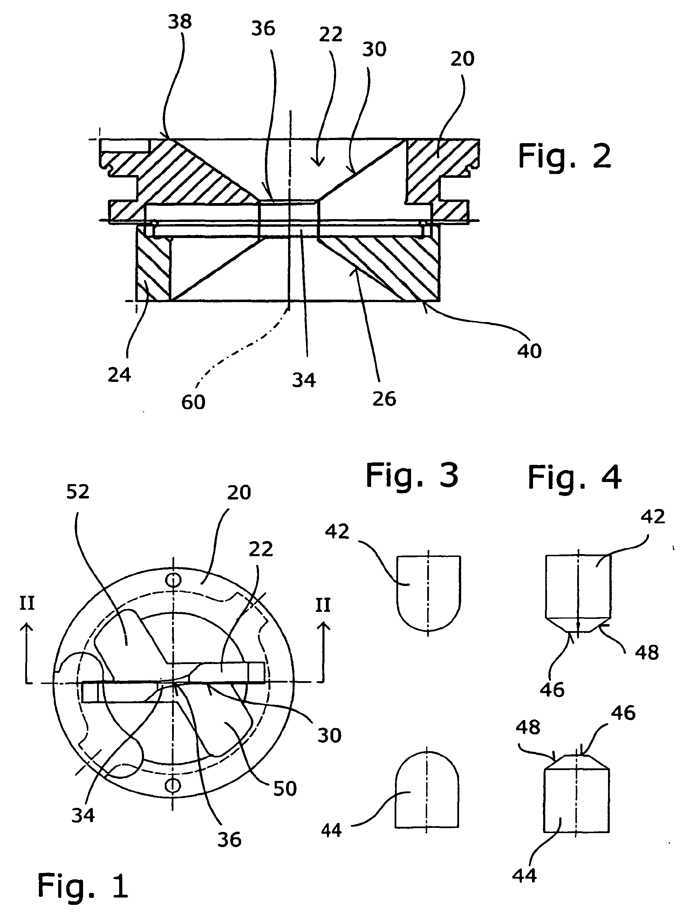

Figur 3 zeigt Frontbereiche von Punktschweißelektroden, wobei die Bezugsziffer 42 für die obere Punktschweißelektrode und die Bezugsziffer 44 für die baugleiche untere Punktschweißelektrode steht. Alternativ kann es sich auch um Kappen von Punktschweißelektroden handeln, wie sie häufig eingesetzt werden.

In Figur 3 ist der Zustand vor dem Fräsen gezeigt. Figur 4 zeigt den Zustand nach der Fräsbehandlung. Durch diese wurden ein Zentralbereich 46 und eine Flanke 48 ausgebildet. Der Zentralbereich 46 ist der Wirkbereich bzw. die Wirkfläche der Elektrode. Der Durchmesser liegt bei etwa der Hälfte des Durchmessers der Elektrode. Der Zentralbereich 46 kann eben oder konkav gewölbt sein. Die Flanke 48 steigt beispielsweise mit einem Winkel, der in einem Winkelbereich zwischen 36° und 45° liegt, zu einer Längsachse der Elektrode 42, 44 an.

Im gezeigten Ausführungsbeispiel haben Oberseite 38 und Unterseite 40 des Fräskopfes jeweils nur eine Flankenschneide 30 und jeweils nur eine Zentralschneide 36. Die Zentralschneide 36geht jeweils kontinuierlich in die zugehörige Flankenschneide 30 derselben Seite 38 bzw. 40 über. Die Schneiden 30, 36 der einen Seiten sind rotationsmäßig um 180° zu den Schneiden 30, 36 der anderen Seite angeordnet. Der Messerbalken 34 steht in einem Winkel grösser 0 und kleiner 20° und insbesondere ≤ 10° zu der Schnittlinie II-II in Figur 1. Die Schneiden 30, 36 der Oberseite 38 und der Unterseite 40 sind baugleich ausgeführt.

Der Fräskopf weist zwei Durchlässe 50,52 auf, im Folgenden als erster Durchlass 50 und als zweiter Durchlass 52 bezeichnet. Der erste Durchlass 50 ist der Oberseite 38 zugeordnet und er wird u.a. durch die Flankenschneide 30 und die Zentralschneide 36 der Oberseite 38 begrenzt. Der zweite Durchlass 52 ist der Unterseite 40 zugeordnet und wird u.a. durch die Flankenschneide 30 und die Zentralschneide 36 der Unterseite 40 begrenzt. Die beiden Durchlässe 50, 52 sind durch den Messerbalken 34 und durch Teilstücke der Randbereiche des Fräseinsatzes 22 voneinander getrennt. Entfernt man den Fräseinsatz 22, so gehen die beiden Durchlässe 50, 52 ineinander über.

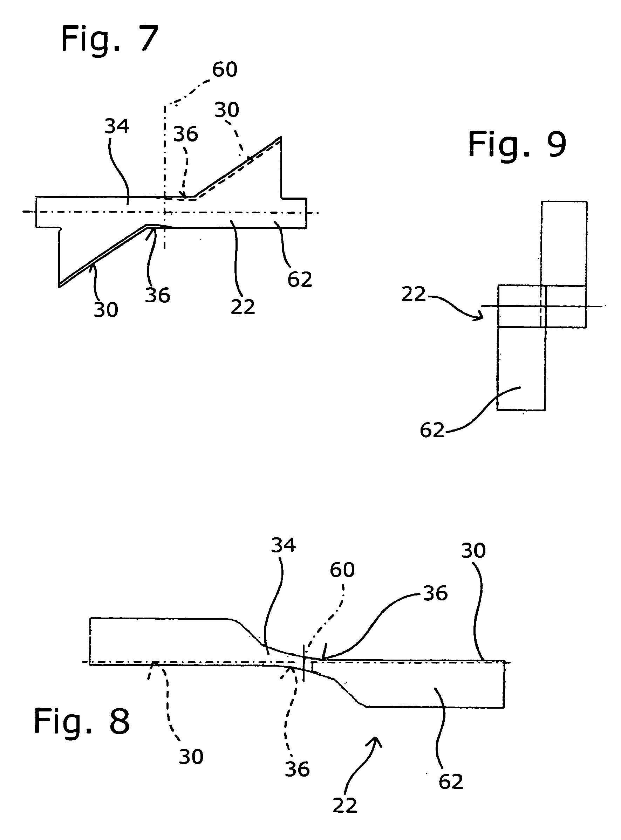

Der Fräseinsatz 22 weist den Messerbalken 34, an dem die beiden Zentralschneiden 36 ausgebildet sind, und zwei Randbereiche 62 auf. Jeder der Randbereiche 62 hat eine Flankenschneide 30. Wie insbesondere Figur 9 zeigt, ist der Fräseinsatz 22 im Bereich des Messerbalkens 34 etwa um die Dicke der beiden Randbereiche 62 versetzt. Der Messerbalken 34 geht leicht gewölbt ausgehend von den Randbereichen 62 in die Mitte über. Diese ist durch eine Drehachse 60des Fräseinsatzes 22 bestimmt.

Die Anmelderin behält sich vor, beliebige Merkmale, Teilmerkmale und/oder Untermerkmale aus Ansprüchen und/oder aus Sätzen oder Satzteilen der Beschreibung in beliebiger Form miteinander zu kombinieren.

## Patentansprüche

1. Fräskopf für zwei Punktschweißelektroden (42, 44) einer Schweißzange, wobei die Punktschweißelektroden jeweils einen Zentralbereich (46) und eine umlaufende Flanke (48) aufweisen, der Fräskopf eine Oberseite (38), eine Unterseite (40) und mindestens zwei Durchlässe (50, 52) hat, welche die Oberseite (38) und die Unterseite (40) miteinander verbinden, Oberseite (38) und Unterseite (40) jeweils mindestens eine Flankenschneide (30) für die Bearbeitung der Flanke (48) der zugehörigen Punktschweißelektrode (42, 44) und mindestens eine Zentralschneide (36) für die Bearbeitung des Zentralbereichs (46) der zugehörigen Punktschweißelektrode (42, 44) haben, dabei ist jeder Durchlass (50, 52) von mindestens einer Zentralschneide (36) und/oder mindestens einer Flankenschneide (30) teilweise begrenzt, **dadurch gekennzeichnet, dass** jeder einzelne Durchlass entweder nur von einer Flankenschneide (30) und/oder einer Zentralschneide (36) der Oberseite (38) oder einer Flankenschneide (30) und/oder einer Zentralschneide (36) der Unterseite (40) begrenzt ist.

2. Fräskopf nach Anspruch 1, **dadurch gekennzeichnet, dass** jeder einzelne Durchlass entweder nur von einer Flankenschneide (30) und/oder nur einer Zentralschneide (36) der Oberseite (38) oder von nur einer Flankenschneide (30) und/oder nur einer Zentralschneide (36) der Unterseite (40) begrenzt ist.

3. Fräskopf nach Anspruch 1 oder 2, **dadurch gekennzeichnet, dass** die Oberseite (38) und die Unterseite (40) jeweils nur eine Flankenschneide (30) und/oder nur eine Zentralschneide (36) aufweisen.

4. Fräskopf nach einem der Ansprüche 1 bis 3**dadurch gekennzeichnet, dass** die Zentralschneide (36) der Oberseite (38) und die Zentralschneide (36) der Unterseite (40) auf einem Messerbalken (34) angeordnet sind.

5. Fräskopf nach einem der vorangegangenen Ansprüche, **dadurch gekennzeichnet, dass** die mindestens eine Flankenschneide (30) der Oberseite (38) kontinuierlich in eine Zentralschneide (36) der Oberseite (38) übergeht und die mindestens eine Flankenschneide (30) der Unterseite (40) kontinuierlich in eine Zentralschneide (36) der Unterseite (40) übergeht.

6. Fräskopf nach einem der vorangegangenen Ansprüche, **dadurch gekennzeichnet, dass** die Schneiden rotationssymmetrisch angeordnet sind, insbesondere rotationssymmetrisch um 180° angeordnet sind.

7. Fräskopf nach einem der vorangegangenen Ansprüche, **dadurch gekennzeichnet, dass** er nur zwei Zentralschneiden (36) aufweist und dass die Zentralschneiden (36) um 180° versetzt sind.

8. Fräskopf nach einem der vorangegangenen Ansprüche, **dadurch gekennzeichnet, dass** die Schneiden der Oberseite (38) und der Unterseite (40) baugleich ausgeführt sind.

9. Fräskopf nach einem der vorangegangenen Ansprüche, **dadurch gekennzeichnet, dass** der Fräseinsatz (22) einstückig ausgebildet ist.

10. Fräskopf nach einem der vorangegangenen Ansprüche, **dadurch gekennzeichnet, dass** der Fräseinsatz (22) im Bereich des Messerbalkens (34) einen Parallelversatz aufweist, und dass vorzugsweise das Maß dieses Parallelversatzes etwa der Materialdicke von Randbereichen (62) des Fräseinsatzes (22) entspricht.

## Claims

1. Milling head for two spot welding electrodes (42, 44) of welding tongs, wherein the spot welding electrodes each have a central area (46) and a peripheral flank (48), the milling head has a top side (38), a bottom side (40); and at least two passages (50, 52) which connect the top side (38) and the bottom side (40) with each other, the top side (38) and the bottom side (40) each have at least one flank cutting edge (30) for processing the flank (48) of the associated spot welding electrode (42, 44) and at least one central cutting edge (36) for processing the central area (46) of the associated spot welding electrode (42, 44), with each passage (50, 52) being partially limited by at least one central cutting edge (36) and/or at least one flank cutting edge (30), **characterised in that** each individual passage is limited either only by one flank cutting edge (30) and/or one central cutting edge (36) of the top side (38), or by one flank cutting edge (30) and/or one central cutting edge (36) of the bottom side (40).

2. Milling head according to claim 1, **characterised in that** each individual passage is limited either by only one flank cutting edge (30) and/or only one central cutting edge (36) of the top side (38), or by only one flank cutting edge (30) and/or only one central cutting edge (36) of the bottom side (40).

3. Milling head according to claim 1 or 2, **characterised in that** the top side (38) and the bottom side (40) each have only one flank cutting edge (30) and/or only one central cutting edge (36).

4. Milling head according to any one of the claims 1 or 3, **characterised in that** the central cutting edge (36) of the top side (38) and central cutting edge (36) of the bottom side (40) are disposed on a cutter bar (34).

5. Milling head according to any one of the preceding claims, **characterised in that** the at least one flank cutting edge (30) of the top side (38) transitions steadily into a central cutting edge (36) of the top side (38) and the at least one flank cutting edge (30) of the bottom side (40) transitions steadily into a central cutting edge (36) of the bottom side (40).

6. Milling head according to any one of the preceding claims, **characterised in that** the cutting edges are arranged in a rotationally symmetric manner, in particular rotationally symmetric by 180°.

7. Milling head according to any one of the preceding claims, **characterised in that** it comprises only two central cutting edges (36) and that the cutting edges (36) are offset by 180°.

8. Milling head according to any one of the preceding claims, **characterised in that** the cutting edges of the top side (38) and the bottom side (40) are configured to be constructionally identical.

9. Milling head according to any one of the preceding claims, **characterised in that** the milling insert (22) is made of a single piece.

10. Milling head according to any one of the preceding claims, **characterised in that** the milling insert (22) has a parallel offset in the area of the cutter bar (34) and that preferably the size of this parallel offset approximately corresponds to the material thickness of edge areas (62) of the milling insert (22).

## Revendications

1. Tête de fraisage pour deux électrodes de soudage par points (42, 44) d'une pince à souder, les électrodes de soudage par points présentant chacune une zone centrale (46) et un flanc circonférentiel (48), ladite tête de fraisage ayant une face supérieure (38), une face inférieure (40) et au moins deux passages (50, 52) qui relient entre elles lesdites faces supérieure (38) et inférieure (40), lesdites faces supérieure (38) et inférieure (40) ayant chacune au moins un tranchant de flanc (30) pour l'usinage du flanc (48) de l'électrode associée de soudage par points (42, 44) et au moins un tranchant central (36) pour l'usinage de la zone centrale (46) de l'électrode associée de soudage par points (42, 44), chacun des passages (50, 52) étant limité en partie par au moins un tranchant central (36) et/ou par au moins un tranchant de flanc (30), **caractérisée par le fait que** chaque passage individuel n'est limité que soit par un tranchant de flanc (30) et/ou un tranchant central (36) de la face supérieure (38) soit par un tranchant de flanc (30) et/ou un tranchant central (36) de la face inférieure (40).

2. Tête de fraisage selon la revendication 1, **caractérisée par le fait que** chaque passage individuel est limité soit par un seul tranchant de flanc (30) et/ou par un seul tranchant central (36) de la face supérieure (38) soit par un seul tranchant de flanc (30) et/ou par un seul tranchant central (36) de la face inférieure (40).

3. Tête de fraisage selon la revendication 1 ou 2, **caractérisée par le fait que** la face supérieure (36) et la face inférieure (40) ne présentent chacune qu'un seul tranchant de flanc (30) et/ou qu'un seul tranchant central (36).

4. Tête de fraisage selon l'une quelconque des revendications 1 à 3, **caractérisée par le fait que** le tranchant central (36) de la face supérieure (38) et le tranchant central (36) de la face inférieure (40) sont disposés sur une barre porte-lame (34).

5. Tête de fraisage selon l'une quelconque des revendications précédentes, **caractérisée par le fait que** ledit au moins un tranchant de flanc (30) de la face supérieure (38) passe de façon continue à un tranchant central (36) de la face supérieure (38) et que ledit au moins un tranchant de flanc (30) de la face inférieure (40) passe de façon continue à un tranchant central (36) de la face inférieure (40).

6. Tête de fraisage selon l'une quelconque des revendications précédentes, **caractérisée par le fait que** les tranchants sont disposés à symétrie de révolution, en particulier disposés à symétrie de révolution de 180°.

7. Tête de fraisage selon l'une quelconque des revendications précédentes, **caractérisée par le fait qu'**elle ne comprend que deux tranchants centraux (36) et que les tranchants centraux (36) sont décalés de 180°.

8. Tête de fraisage selon l'une quelconque des revendications précédentes, **caractérisée par le fait que** les tranchants de la face supérieure (38) et de la face inférieure (40) sont configurés de façon identique.

9. Tête de fraisage selon l'une quelconque des revendications précédentes, **caractérisée par le fait que** l'insert de fraisage (22) est réalisé d'une seule pièce.

10. Tête de fraisage selon l'une quelconque des revendications précédentes, **caractérisée par le fait que** ledit insert de fraisage (22) présente un déport parallèle au niveau de ladite barre porte-lame (34) et que, de préférence, la mesure de ce déport parallèle correspond à peu près à l'épaisseur de matière de zones marginales (62) de l'insert de fraisage (22).
